# EUROPÄISCHE PATENTSCHRIFT

(11) **EP 4 415 914 B1**
(45) Veröffentlichungstag und Bekanntmachung des Hinweises auf die Patenterteilung: **24.12.2025**
(21) Anmeldenummer: 22800221.8
(22) Anmeldetag: 06.10.2022
(51) Int. Cl.: B23F 23/12, G05B 19/18, G05B 23/02, G05B 19/406, G06N 3/08

(54) **VERFAHREN UND VORRICHTUNGEN ZUR ÜBERWACHUNG DES ZUSTANDS EINER VERZAHNMASCHINE**
METHODS AND DEVICES FOR MONITORING THE STATE OF A GEAR CUTTING MACHINE
PROCÉDÉS ET DISPOSITIFS DE SURVEILLANCE DE L'ÉTAT D'UNE MACHINE DE COUPE À ENGRENAGES

(30) Priorität: 11.10.2021 CH 0703742021
(43) Veröffentlichungstag der Anmeldung: 21.08.2024
(73) Patentinhaber: Reishauer AG, 8304 Wallisellen (CH)
(72) Erfinder: DIETZ, Christian, 8304 Wallisellen (CH)
(74) Vertreter: Detken, Andreas
(86) Internationale Anmeldenummer: PCT/EP2022/077838
(87) Internationale Veröffentlichungsnummer: WO 2023/061851

(56) Entgegenhaltungen:
- EP-A1- 3 168 700
- EP-A1- 3 324 170
- WO-A1-2021/048027
- WO-A1-2021/123276
- CH-A1- 715 989
- CN-A- 111 413 925
- GB-A- 2 149 551
- US-A- 3 809 870
- US-A1- 2014 256 223
- US-A1- 2018 264 613

## Beschreibung

### TECHNISCHES GEBIET

Die vorliegende Erfindung betrifft Verfahren zur Überwachung des Zustands einer Verzahnmaschine zur spanenden Bearbeitung von verzahnten Werkstücken, insbesondere einer Verzahnungsschleifmaschine. Verfahren gemäss den Oberbegriffen der Ansprüche 1, 6 und 10 sind aus dem Dokument US 2014/0256223 A1 bekannt.

Die Erfindung betrifft auch ein Verfahren zum Erstellen eines Trainingsdatensatzes eines maschinellen Lernalgorithmus gemäss dem Oberbegriff des Anspruchs 8 und ein Verfahren zum Trainieren eines maschinellen Lernalgorithmus gemäss dem Oberbegriff des Anspruchs 9. Verfahren gemäss den Oberbegriffen dieser Ansprüche sind aus dem Dokument US 2018/0264613 A1 bekannt.

Die Erfindung betrifft zudem Vorrichtungen zur Überwachung des Zustands einer Verzahnmaschine mit einer Mehrzahl von Maschinenachsen gemäss den Oberbegriffen der Ansprüche 14 und 15. Vorrichtungen nach den Oberbegriffen dieser Ansprüche sind aus dem Dokument CH 715989 A1 bekannt.

### STAND DER TECHNIK

Bei der Hartfeinbearbeitung von verzahnten Werkstücken, insbesondere aussen- oder innenverzahnten Zahnräder, in einer Verzahnmaschine treten naturgemäss Fertigungsabweichungen auf, die sich in Abweichungen der tatsächlich gefertigten Ist-Geometrie der Werkstücke von einer vorgegebenen Soll-Geometrie äussern. Die Fertigungsabweichungen können unter anderem durch Fehlfunktionen oder Verschleiss der unterschiedlichen Komponenten der Verzahnmaschine oder durch eine ungeeignete Montage der Komponenten bedingt sein. Beispielsweise kann eine Fertigungsabweichung dadurch verursacht werden, dass ein Antrieb einen Schlitten der Verzahnmaschine zu einer anderen Position als der durch die Maschinensteuerung vorgegebenen Soll-Position bewegt, dass ein Lager einer Spindel verschlissen ist, oder dass Maschinenteile auf eine ungeeignete Weise miteinander verbunden sind, so dass Vibrationen nicht genügend gedämpft werden.

Die Hartfeinbearbeitung stellt meist den letzten Schritt in der Werkstückbearbeitung dar. Die Werkstücke werden nach diesem Bearbeitungsschritt in Getriebe eingebaut. Nach dem Zusammenbau erfolgt eine abschliessende Prüfung ("EOL-Prüfung") der Getriebe auf einem EOL-Prüfstand (EOL = End of Line). Dabei wird insbesondere das Geräuschverhalten des Getriebes geprüft. Fertigungsabweichungen der Werkstücke führen häufig zu unerwünschten Geräuschanregungen. Dabei können auch schon kleinste Fertigungsabweichungen, wie sie bei der Bearbeitung auf einer einwandfreien Maschine entstehen können, zu Geräuschen führen. Insbesondere bei Elektroantrieben ist das Getriebe manchmal die dominierende Geräuschquelle, und eine Geräuschentwicklung im Getriebe macht sich besonders störend bemerkbar.

Es ist wünschenswert, das Geräuschverhalten, das durch ein Werkstück verursacht wird, schon vorhersagen zu können, bevor das Werkstück in ein Getriebe eingebaut wird, um eine teure Demontage zu vermeiden, die erforderlich wird, wenn sich das Getriebe bei der EOL-Prüfung als geräuschanfällig herausstellt. Auch ist es wünschenswert, aus dem gemessenen Geräuschverhalten eines Getriebes direkte Rückschlüsse auf konkrete Ursachen in der Verzahnmaschine ziehen zu können.

US20140256223A1 offenbart ein Verfahren zum Hartfeinbearbeiten von Zahnflanken mit Korrekturen und/oder Modifikationen auf einer Verzahnmaschine, wobei jeweils Zahnradpaarungen, die miteinander innerhalb eines Getriebes oder einer Prüfeinrichtung im Eingriff sind, unter Berücksichtigung der jeweiligen Gegenflanken bearbeitet werden und wobei die Zahnflanken der betroffenen Werkstücke mit periodischen Welligkeitskorrekturen oder -modifikationen versehen werden. Mittels Drehwegfehlermessung der Zahnradpaarungen in einer Verzahnungsmesseinrichtung und/oder in einem Getriebe wird der Drehfehlerverlauf bestimmt. Dieses Messergebnis dient als Eingangsgröße zur Definition der Amplitude, Frequenz und Phasenlage für die periodischen Flankenwelligkeitskorrekturen auf den Zahnflanken der Zahnradpaarungen für die Fertigung in der Verzahnungsmaschine.

### DARSTELLUNG DER ERFINDUNG

### Erster Aspekt: Vorhersage von Geräuschanregungen

In einem ersten Aspekt ist es eine Aufgabe der vorliegenden Erfindung, ein Verfahren zur Überwachung des Zustands einer Verzahnmaschine anzugeben, mit dem die Entwicklung störender Geräusche in einem Getriebe, das ein mit der Verzahnmaschine bearbeitetes Werkstück enthält, frühzeitig vorhergesagt werden kann.

Diese Aufgabe wird durch ein Verfahren nach Anspruch 1 gelöst. Weitere Ausführungsformen sind in den abhängigen Ansprüchen angegeben.

Es wird also ein Verfahren zur Überwachung eines Zustands einer Verzahnmaschine mit einer Mehrzahl von Maschinenachsen angegeben, das die folgenden Schritte aufweist:
a) Durchführen eines Prüfzyklus, wobei in dem Prüfzyklus mindestens ein Teil der Maschinenachsen systematisch betätigt wird und zugeordnete Maschinenmessdaten ermittelt werden;
b) Durchführen einer spektralen Analyse der Maschinenmessdaten, bei der aus den Maschinenmessdaten Maschinenspektraldaten berechnet werden; und
c) Ermitteln von prognostizierten EOL-Spektraldaten basierend auf den Maschinenspektraldaten, wobei die prognostizierten EOL-Spektraldaten angeben, bei welchen Ordnungen Anregungen in einem EOL-Spektrum zu erwarten sind, wenn ein mit der Verzahnmaschine bearbeitetes Werkstück in ein Getriebe eingebaut ist und im Getriebe auf einer Gegenverzahnung abwälzt.

Das Verfahren kann umfassen:
d) Ausgeben der prognostizierten EOL-Spektraldaten oder mindestens einer daraus abgeleiteten Grösse.

Im Rahmen des vorgeschlagenen Verfahrens werden also in einem Prüfzyklus Maschinenmessdaten ermittelt, während gezielt Maschinenachsen betätigt werden. Der Prüfzyklus findet in einer Bearbeitungspause der Verzahnmaschine statt, d.h. während des Prüfzyklus befindet sich das Bearbeitungswerkzeug der Verzahnmaschine nicht im Bearbeitungseingriff mit einem Werkstück. Bei den Maschinenmessdaten kann es sich insbesondere um Beschleunigungswerte, die mit einem Beschleunigungssensor ermittelt wurden, um Positionswerte, die mit einem Positionssensor ermittelt wurden, und/oder um Stromwerte, die mit einem Stromsensor ermittelt wurden, handeln. Aus den Maschinenmessdaten werden durch eine spektrale Analyse (insbesondere eine Ordnungsanalyse) Maschinenspektraldaten (spektrale Zustandsdaten für die Maschine) berechnet, um festzustellen, bei welchen Frequenzen oder Ordnungen periodische Anregungen von Maschinenkomponenten auftreten, während eine Maschinenachse betätigt wird.

Basierend auf den Maschinenspektraldaten werden EOL-Spektraldaten prognostiziert. Diese Prognose beruht auf den folgenden Überlegungen: Die Anregungen der Maschinenkomponenten übertragen sich bei der Bearbeitung auf die gefertigten Werkstücke. Wenn das Bearbeitungswerkzeug unter Einsatz der Maschinenachsen abgerichtet wird, übertragen sich diese Anregungen auch auf das so abgerichtete Werkzeug, von wo sie bei der Bearbeitung weiter auf das Werkstück übertragen werden. Anhand der bekannten kinematischen Verknüpfungen zwischen den einzelnen Maschinenkomponenten und unter Berücksichtigung der gewählten Bearbeitungsparameter lässt sich nun berechnen, wie sich solche Anregungen an den gefertigten Werkstücken auswirken. Insbesondere können solche Anregungen zu periodischen Abweichungen (Welligkeiten) auf den Zahnflanken der Werkstücke führen. Als "kinematische Verknüpfung" wird dabei die Art und Weise bezeichnet, wie im Bearbeitungsprozess eine Bewegung einer Komponente auf eine andere Komponente übertragen wird. Im Bearbeitungsprozess spielt die kinematische Verknüpfung zwischen Werkzeugspindel und Werkstückspindel eine zentrale Rolle, d.h. die Art und Weise, wie Bewegungen des Werkzeugs mit Bewegungen des Werkstücks korrelieren. Wenn es sich bei der Verzahnmaschine um eine Maschine zur Wälzbearbeitung der Werkstücke, z.B. eine Wälzschleifmaschine oder Wälzschälmaschine handelt, ist diese Verknüpfung durch den Wälzeingriff zwischen Werkstück und Werkzeug gekennzeichnet und durch die Werkstückgeometrie und die Werkzeuggeometrie bestimmt. Die Art und Weise, wie eine periodische Anregung des Werkzeugs durch diese Verknüpfung als eine Welligkeit auf die Werkstückflanken übertragen wird, lässt sich problemlos berechnen. Insbesondere lässt sich leicht berechnen, welche Ordnung, bezogen auf die Werkstückdrehung, eine durch die Welligkeit erzeugte Anregung im Getriebe haben wird, wenn die Ordnung der dafür ursächlichen Anregung des Werkzeugs, bezogen auf die Werkzeugdrehung, bekannt ist. Das Verhältnis zwischen diesen beiden Ordnungen wird im Folgenden als "Übertragungsfaktor" bezeichnet. Auch für alle anderen Komponenten, zwischen denen Bewegungen übertragen werden, lässt sich berechnen, wie sich Schwingungen einer dieser Komponenten auf die andere Komponente auswirken, und insbesondere lassen sich die entsprechenden Übertragungsfaktoren zwischen Störordnungen dieser Komponenten und den resultierenden Störordnungen im EOL-Spektrum berechnen.

Die Berechnung der prognostizierten EOL-Spektraldaten kann also die Anwendung eines Übertragungsfaktors auf die Maschinenspektraldaten umfassen, wobei der Übertragungsfaktor von der kinematischen Verknüpfung zwischen der Maschinenachse, für die die Maschinenspektraldaten bestimmt wurden, und dem Werkstück abhängt.

Durch das angegebene Verfahren werden also prognostizierte EOL-Spektraldaten erhalten. Diese prognostizierten EOL-Spektraldaten beruhen auf einer Prüfung des realen Maschinenzustands und beziehen dadurch Störquellen in der Maschine ein, die unter Umständen a priori nicht bekannt waren und daher bei einer Berechnung oder Simulation von EOL-Spektraldaten, die rein auf dem bekannten Aufbau der Maschine beruht, nicht einfliessen können. Dadurch erlaubt das Verfahren eine zuverlässige Vorhersage, bei welchen Ordnungen im fertigen Getriebe Geräuschanregungen auftreten werden. Auf diese Weise können Geräuschanregungen schon vorhergesagt werden, bevor die Werkstücke tatsächlich in Getriebe eingebaut werden. Die betroffenen Werkstücke können ausgeschleust und gegebenenfalls näher geprüft werden, und ein aufwändiger Rückbau fertig zusammengesetzter Getriebe kann so verhindert werden. Zudem können Massnahmen ergriffen werden, um die Fehlerquelle, die zu den erwarteten Geräuschentwicklungen führt, zu identifizieren und zu beseitigen.

Dabei ist wichtig festzuhalten, dass es sich bei der Ermittlung der prognostizierten EOL-Spektraldaten nicht notwendigerweise um eine quantitative Vorhersage der Geräuschintensitäten bei den verschiedenen Ordnungen handelt, sondern um eine qualitative Indikation, welche Ordnungen überhaupt "Störordnungen" sind, d.h. bei welchen Ordnungen überhaupt eine signifikante Geräuschintensität zu erwarten ist. Die prognostizierten EOL-Spektraldaten können insbesondere die Störordnungen und zugeordnete Intensitätsindikatoren umfassen, wobei die Intensitätsindikatoren (möglicherweise nur sehr grobe) Schätzwerte für erwartete Störintensitäten bei den Störordnungen darstellen.

Die prognostizierten EOL-Spektraldaten können insbesondere einzeln pro betätigter Maschinenachse ermittelt werden, d.h. es werden für jede Maschinenachse, die während eines Prüfzyklus aktiviert wird, separate Maschinenmessdaten ermittelt, aus diesen separaten Maschinenmessdaten werden separate Maschinenspektraldaten berechnet, und darauf basierend werden separate EOL-Spektraldaten pro betätigter Maschinenachse prognostiziert. Auf diese Weise wird es möglich, eine Vorhersage zu treffen, welche Maschinenachse welche Störordnungen in den EOL-Spektraldaten verursachen kann.

Bevorzugt werden die Schritte a) bis c) mehrfach wiederholt, wobei zwischen den Prüfzyklen mit der Verzahnmaschine Werkstücke bearbeitet werden und die Prüfzyklen in Bearbeitungspausen durchgeführt werden, in denen sich das Bearbeitungswerkzeug nicht in einem Bearbeitungseingriff mit einem Werkstück befindet. Es wird dann eine Entwicklung der prognostizierten EOL-Spektraldaten als Funktion des Prüfzyklus bzw. der Zeit visualisiert und/oder analysiert. Dem liegt die Überlegung zu Grunde, dass die prognostizierten EOL-Spektraldaten aufgrund von einem einzigen Prüfzyklus manchmal wenig aussagekräftig sein können. Während der Bearbeitung kann es aber zu Verschleiss oder Versagen von Komponenten der Verzahnmaschine kommen, die sich dann in einer signifikanten Änderung der prognostizierten EOL-Spektraldaten äussern. Daher wird vorgeschlagen, die zeitliche Entwicklung der prognostizierten EOL-Spektraldaten zu betrachten. Durch eine geeignete Visualisierung der zeitlichen Veränderung der prognostizierten EOL-Spektraldaten können Störordnungen, bei denen mit der Zeit signifikante Veränderungen im Geräuschanregungsverhalten erwartet werden, leicht visuell identifiziert werden. Die Entwicklung der berechneten EOL-Spektraldaten kann auch numerisch analysiert werden. Eine numerische Analyse kann beispielsweise die Durchführung einer Regressionsanalyse der erwarteten Störintensitäten für ausgewählte oder alle Störordnungen mit geeigneten Regressionsfunktionen, z.B. einem Polynom von mindestens zweiter Ordnung, umfassen. Beispielsweise kann auf dieser Basis ein Warnindikator ermittelt und ausgegeben werden, wenn die Analyse zeigt, dass bei mindestens einer Störordnung ein Gradient der Störintensität zu erwarten ist, der ein bestimmtes Warnkriterium erfüllt.

Wenn Referenz-Maschinenspektraldaten für viele Referenzmaschinen vorliegen, die in vielen unterschiedlichen Referenz-Prüfzyklen ermittelt wurden, können aus diesen Referenz-Maschinenspektraldaten jeweils Referenz-EOL-Spektraldaten prognostiziert werden. Es ist dann möglich, die prognostizierten EOL-Spektraldaten der zu beurteilenden Maschine durch einen Vergleich mit den prognostizierten Referenz-EOL-Spektraldaten der Referenzmaschinen oder daraus abgeleiteten Grössen automatisch zu bewerten und so automatisch auf erwartete Geräuschprobleme zu schliessen, ohne dass dafür besondere Kenntnisse erforderlich wären und ohne dass gemessene EOL-Spektren als Bewertungsgrundlage benötigt werden. Insbesondere kann dazu eine statistische Analyse der prognostizierten Referenz-EOL-Spektraldaten vorgenommen werden. Bezüglich der diesem Vorgehen zugrundeliegenden Überlegungen und weiterer Ausführungsmöglichkeiten wird auf die am selben Tag wie die vorliegende Anmeldung eingereichte Patentanmeldung desselben Anmelders mit dem Titel "Verfahren zur Überwachung des Zustands einer Werkzeugmaschine" verwiesen, deren Inhalt durch Verweis vollständig in die vorliegende Offenbarung einbezogen wird.

### Zweiter Aspekt: Identifikation von Komponenten, die Geräuschprobleme verursachen

Auch der umgekehrte Weg ist möglich, nämlich eine Messung von EOL-Messwerten auf dem EOL-Prüfstand, während das Werkstück im Getriebe auf einer Gegenverzahnung abwälzt, eine spektrale Analyse der EOL-Messwerte, um gemessene EOL-Spektraldaten zu ermitteln, und ein Rückschluss aus diesen EOL-Spektraldaten auf einzelne Komponenten der Verzahnmaschine, deren Zustand Störordnungen in den EOL-Spektraldaten verursacht. Die EOL-Messwerte können dabei durch beliebige geeignete Sensoren des EOL-Prüfstands bestimmt werden, insbesondere Beschleunigungssensoren und Sensoren zur Ermittlung von Drehfehlern.

Es wird also ein Verfahren gemäß Anspruch 6 zur Überwachung eines Zustands einer Verzahnmaschine mit einer Mehrzahl von Maschinenachsen angegeben, das die folgenden Schritte aufweist:
a) Durchführen einer EOL-Prüfung an einem Getriebe, das ein mit der Verzahnmaschine bearbeitetes Werkstück enthält, wobei in der EOL-Prüfung das Werkstück im Getriebe auf einer Gegenverzahnung abwälzt und zugeordnete EOL-Messdaten ermittelt werden;
b) Durchführen einer spektralen Analyse der EOL-Messdaten, bei der aus den EOL-Messdaten EOL-Spektraldaten berechnet werden; und
c) Ermitteln von prognostizierten Zustandsdaten basierend auf den EOL-Spektraldaten, wobei die prognostizierten Zustandsdaten für mindestens eine Maschinenachse angeben, welche Ordnungen dieser Maschinenachse mit den berechneten EOL-Spektraldaten konsistent sind.

Das Verfahren kann umfassen:
d) Ausgeben der prognostizierten Zustandsdaten oder mindestens einer daraus abgeleiteten Grösse.

Mit diesem Verfahren können Rückschlüsse darauf gezogen werden, welche Maschinenachsen und ggfs. welche Komponenten dieser Maschinenachsen für Störgeräusche verantwortlich sind, die nach dem Einbau eines mit der Verzahnmaschine bearbeiteten Werkstücks in einem Getriebe tatsächlich aufgetreten sind. Auch dieses Verfahren nutzt aus, dass sich die Ordnungen von Störgeräuschen, bezogen auf die Rotation des Werkstücks im Getriebe, bei Kenntnis der kinematischen Verknüpfungen zwischen den Komponenten der Verzahnmaschine und unter Berücksichtigung der gewählten Bearbeitungsparameter ohne Weiteres aus den Ordnungen von Messdaten, die für die Komponenten der Verzahnmaschine bestimmt wurden, berechnen lassen.

Insbesondere kann dieses Verfahren ausgeführt werden, ohne dass Zustandsmessungen an der Verzahnmaschine selbst erforderlich sind. Besondere Vorteile ergeben sich aber, wenn dieses Verfahren mit Zustandsmessungen an der Verzahnmaschine kombiniert wird. Insofern kann das Verfahren zusätzlich umfassen:
e) Durchführen eines Prüfzyklus, in dem mindestens ein Teil der Maschinenachsen systematisch betätigt wird und zugeordnete Maschinenmessdaten ermittelt werden;
f) Durchführen einer spektralen Analyse, bei der aus den Maschinenmessdaten Maschinenspektraldaten berechnet werden; und
g) Ermitteln von prognostizierten EOL-Spektraldaten basierend auf den Maschinenspektraldaten, wobei die prognostizierten EOL-Spektraldaten angeben, bei welchen Ordnungen Anregungen in einem EOL-Spektrum zu erwarten sind, wenn ein mit der Verzahnmaschine bearbeitetes Werkstück in ein Getriebe eingebaut ist und im Getriebe auf einer Gegenverzahnung abwälzt,
wobei das Ermitteln der prognostizierten Zustandsdaten einen Vergleich der EOL-Spektraldaten, die aus den EOL-Messdaten berechnet wurden, mit den prognostizierten EOL-Spektraldaten umfasst.

Durch den Vergleich von EOL-Spektraldaten, die durch Messungen während eines Testlaufs des Getriebes ermittelt wurden, mit EOL-Spektraldaten, die aus Messdaten der Verzahnmaschine prognostiziert wurden, können Ursachen von Störgeräuschen besonders zuverlässig ermittelt werden.

### Dritter Aspekt: Einsatz eines maschinellen Lernalgorithmus

Die bisher diskutierten Verfahren erfordern Kenntnisse über kinematische Verknüpfungen zwischen Komponenten der Verzahnmaschine. In einem weiteren Aspekt stellt die Erfindung ein Verfahren gemäß Anspruch 10 zur Verfügung, mit dem es möglich ist, auch ohne Kenntnis der kinematischen Verknüpfungen anhand von Messungen des Maschinenzustands das Geräuschverhalten eines Getriebes vorherzusagen oder aus dem gemessenen Geräuschverhalten eines Getriebes Rückschlüsse auf den Zustand der Verzahnmaschine zu ziehen. Bei diesem Verfahren wird ein trainierter maschineller Lernalgorithmus eingesetzt, dessen Eingangsgrössen Zustandsdaten der Verzahnmaschine sind und dessen Ausgangsgrössen prognostizierte EOL-Daten sind, die das erwartete Geräuschverhalten des Getriebes charakterisieren, oder dessen Eingangsgrössen EOL-Daten und dessen Ausgangsgrössen prognostizierte Zustandsdaten sind, die einen erwarteten Zustand der Maschine charakterisieren.

Der maschinelle Lernalgorithmus wird mit dem folgenden Verfahren gemäß Anspruch 9 trainiert:
a) Durchführen eines Prüfzyklus, bei dem mindestens ein Teil der Maschinenachsen systematisch betätigt wird und zugeordnete Zustandsdaten durch Messungen ermittelt werden;
b) Bearbeiten mindestens eines Werkstücks mit der Verzahnmaschine, während sich die Verzahnmaschine in einem Zustand befindet, der durch die Zustandsdaten charakterisiert ist;
c) Einbau des bearbeiteten Werkstücks in ein Getriebe;
d) Durchführen einer EOL-Prüfung an dem Getriebe, wobei in der EOL-Prüfung das Werkstück im Getriebe auf einer Gegenverzahnung abwälzt und zugeordnete EOL-Daten ermittelt werden;
e) Speichern der Zustandsdaten und der korrespondierenden EOL-Daten in einem Trainingsdatensatz;
f) Wiederholen der Schritte a) bis e) für eine Vielzahl von Prüfzyklen und bearbeitete Werkstücke, wobei die Werkstücke die gleiche Soll-Geometrie aufweisen und unter den gleichen Bearbeitungsbedingungen bearbeitet werden; und
g) Trainieren des maschinellen Lernalgorithmus mit dem Trainingsdatensatz.

Der Trainingsdatensatz enthält also eine Vielzahl von Zustandsdaten mit den dazu korrespondierenden EOL-Daten für eine Vielzahl von Werkstücken, die die gleiche Soll-Geometrie aufweisen, unter den gleichen Bearbeitungsbedingungen bearbeitet wurden und in die gleiche Art von Getriebe eingebaut wurden.

Die Soll-Geometrie umfasst dabei insbesondere Grössen wie Normalmodul, Zähnezahl und Schrägungswinkel der Verzahnung, kann aber auch weitergehende Grössen wie vorgegebenen Zahnflankenmodifikationen umfassen. Bearbeitungsbedingungen werden insbesondere als gleich angesehen, wenn die Maschinenachsen bei den Bearbeitungsvorgängen in gleicher Weise bewegt werden. Wenn beispielsweise als Bearbeitungsverfahren das Wälzschleifen eingesetzt wird, sind die Bearbeitungsbedingungen dann gleich, wenn die Werkstücke mit gleicher radialer Zustellung, gleicher axialer Vorschubgeschwindigkeit und gleicher Shiftgeschwindigkeit bearbeitet werden, wenn die Werkzeugdrehzahl für alle Werkstücke gleich ist, und wenn die eingesetzte Schleifschnecke für alle Werkstücke die gleiche Gangzahl und die gleiche Steigungshöhe aufweist, so dass auch die zugeordnete Werkstückdrehzahl gleich ist. Wenn die Schleifschnecke eine abrichtbare Schleifschnecke ist, die mit einem rotierenden schiebenförmigen Abrichtwerkzeug abgerichtet wird, gehören auch die Bedingungen beim Abrichten zu den Bearbeitungsparametern, insbesondere die Drehzahl der Werkzeugspindel und die Drehzahl des Abrichtwerkzeugs während des Abrichtvorgangs.

Der maschinelle Lernalgorithmus wird mit den Zustandsdaten und den damit korrespondierenden EOL-Daten trainiert. In der Folge kann der maschinelle Lernalgorithmus eine Vorhersage von EOL-Daten anhand von Zustandsdaten oder umgekehrt treffen, ohne dass Kenntnisse der kinematischen Verknüpfungen zwischen den Komponenten der Verzahnmaschine nötig sind.

Es sind viele verschiedene Arten von maschinellen Lernalgorithmen bekannt, die in diesem Zusammenhang eingesetzt werden können, und entsprechend kann auch die Struktur des Trainingsdatensatzes variieren. Insbesondere sind für die praktische Umsetzung Klassifikationsalgorithmen geeignet. Dazu können die Ausgangsgrössen auf eine begrenzte Zahl von Klassen reduziert werden. Wenn beispielsweise die Eingangsgrössen EOL-Daten und die Ausgangsgrössen prognostizierte Zustandsdaten sind, können die prognostizierte Zustandsdaten z.B. aus einem reellen Wert pro Maschinenachse bestehen. Jeder Wert kann dann z.B. eine Wahrscheinlichkeit angeben, dass die betreffende Maschinenachse für die beobachteten EOL-Daten verantwortlich ist. Die Trainingsdaten sollten dann Zustandsdaten, die einen einzigen reellen Zustandswert pro Maschinenachse darstellen, und zugeordnete EOL-Daten enthalten. Wenn die Eingangsgrössen Zustandsdaten und die Ausgangsgrössen prognostizierte EOL-Daten sind, können die prognostizierten EOL-Daten beispielsweise aus einem reellen Wert pro Ordnung für eine relativ kleine Zahl von (in der Praxis besonders wichtigen) Ordnungen bestehen. Jeder Wert kann dann z.B. eine prognostizierte relative spektrale Intensität der betreffenden Ordnung angeben. Die Trainingsdaten sollten dann entsprechende EOL-Daten enthalten. Selbstverständlich sind aber auch ganz andere, auch komplexere Ausgangsgrössen denkbar. Für die praktische Umsetzung eignet sich z.B. ein künstliches neuronales Netz (ANN = artificial neural network) oder eine Support Vector Machine (SVM). In einem besonders einfachen Beispiel können die Eingangsgrössen Zustandsdaten sein, und die Ausgangsgrösse ist ein einziger reeller Wert, der das globale Geräuschverhalten des gesamten Getriebes auf dem EOL-Prüfstand charakterisiert. Für die Vorhersage eines solchen Werts eignet sich als maschineller Lernalgorithmus beispielsweise ein Random Forest. Mit einem solchen Wert kann z.B. ein erwartetes problematisches Geräuschverhalten einfach erkannt werden, und es können Massnahmen ergriffen werden, um zu verhindern, dass betroffene Werkstücke in Getriebe verbaut werden.

Die Zustandsdaten können im Allgemeinen Daten verschiedenster Art umfassen, die mit dem Zustand einer Maschinenachse hinsichtlich ihres Schwingungsverhaltens korrelieren. Insbesondere können die Zustandsdaten Maschinenspektraldaten umfassen, wie sie im Kontext des ersten und zweiten Aspekts definiert wurden.

Die EOL-Daten können ebenfalls Daten verschiedenster Art umfassen, die mit dem Geräuschverhalten des Getriebes korrelieren. Insbesondere können die EOL-Daten EOL-Spektraldaten umfassen, wie sie im Kontext des ersten und zweiten Aspekts definiert wurden.

Die Trainingsdaten können in einer Datenbank gespeichert werden. Die Datenbank kann sich entfernt von der zu überwachenden Maschine befinden. Sie kann auch in der Cloud implementiert sein, d.h. in Form von durch mehrere Anwender geteilten Computerressourcen als Dienstleistung. Für das Training des maschinellen Lernalgorithmus kann ein Auswertungsrechner auf die Datenbank zugreifen. Auch der Auswertungsrechner ist vorzugsweise räumlich getrennt von der Werkzeugmaschine angeordnet. Er ist mit der Werkzeugmaschine durch eine Netzwerkverbindung verbunden. Auch der Auswertungsrechner braucht nicht eine einzelne physische Einheit zu sein, sondern kann in der Cloud implementiert sein.

Die Erfindung stellt ausserdem eine Vorrichtung gemäß Anspruch 14 sowie gemäß Anspruch 15 zur Überwachung eines Zustands einer Verzahnmaschine mit einer Mehrzahl von Maschinenachsen zur Verfügung, die einen Prozessor und ein Speichermedium, auf dem ein Computerprogramm gespeichert ist, aufweist. Das Computerprogramm bewirkt bei seiner Ausführung auf dem Prozessor die Ausführung mindestens eines Teils der Verfahrensschritte eines der vorstehend erläuterten Verfahrens. Die Erfindung stellt ausserdem ein entsprechendes Computerprogramm zur Verfügung. Das Computerprogramm kann auf einem nichtflüchtigen Speichermedium gespeichert sein.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine schematische Ansicht einer Wälzschleifmaschine;
- Fig. 2: ein Diagramm zur Erläuterung von Spektraldaten, die in Messzyklen gewonnen wurden;
- Fig. 3: eine Skizze mit EOL-Prüfstand;
- Fig. 4A und 4B: Ausschnitte aus einer Tabelle zur Umrechnung von Ordnungen von Maschinenkomponenten in Ordnungen eines Werkstücks, das in ein Getriebe auf einem EOL-Prüfstand eingebaut ist;
- Fig. 5: ein Diagramm zur Erläuterung von Spektralprognosedaten;
- Fig. 6: eine schematische Darstellung einer zeitlichen Entwicklung der Störintensität an einer Störordnung;
- Fig. 7: eine Skizze zur Erläuterung eines maschinellen Lernalgorithmus; und
- Fig. 8: einen Ausschnitt aus beispielhaften Trainingsdaten für den maschinellen Lernalgorithmus.

### BESCHREIBUNG BEVORZUGTER AUSFÜHRUNGSFORMEN

### Beispielhafter Aufbau einer Wälzschleifmaschine

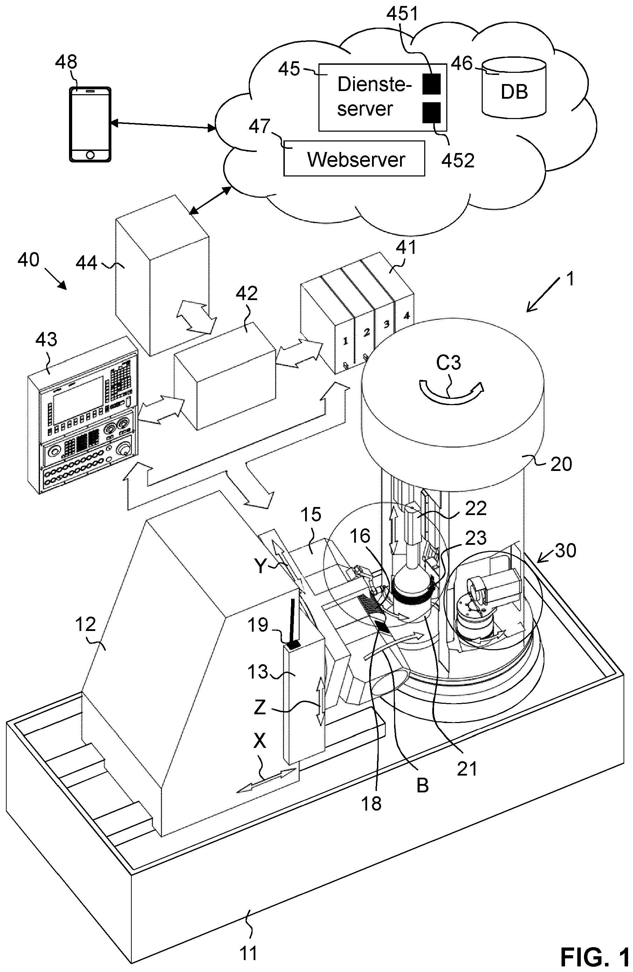

In der Fig. 1 ist als Beispiel für eine Verzahnmaschine beispielhaft eine Wälzschleifmaschine 1 dargestellt, die im Folgenden auch verkürzt als "Maschine" bezeichnet wird. Die Maschine 1 weist ein Maschinenbett 11 auf, auf dem ein Werkzeugträger 12 entlang einer radialen Zustellrichtung X verschiebbar geführt ist. Der Werkzeugträger 12 trägt einen Axialschlitten 13, der entlang einer Vorschubrichtung Z gegenüber dem Werkzeugträger 12 verschiebbar geführt ist. Auf dem Axialschlitten 13 ist ein Schleifkopf 14 montiert, der zur Anpassung an den Schrägungswinkel der zu bearbeitenden Verzahnung um eine parallel zur X-Richtung verlaufende Schwenkachse (die sogenannte A-Achse) verschwenkbar ist. Der Schleifkopf 14 wiederum trägt einen Shiftschlitten, auf dem eine Werkzeugspindel 15 entlang einer Shiftrichtung Y gegenüber dem Schleifkopf 14 verschiebbar ist. Auf der Werkzeugspindel 15 ist eine schneckenförmig profilierte Schleifscheibe (Schleifschnecke) 16 aufgespannt. Die Schleifschnecke 16 wird von der Werkzeugspindel 15 zu einer Drehung um eine Werkzeugachse B angetrieben.

Das Maschinenbett 11 trägt des Weiteren einen schwenkbaren Werkstückträger 20 in Form eines Drehturms, der um eine Schwenkachse C3 zwischen mindestens drei Stellungen verschwenkbar ist. Auf dem Werkstückträger 20 sind einander diametral gegenüberliegend zwei identische Werkstückspindeln montiert, von denen in der Fig. 1 nur eine Werkstückspindel 21 mit zugehörigem Reitstock 22 sichtbar ist. Auf jeder der Werkstückspindeln ist jeweils ein Werkstück aufspannbar und zu einer Rotation um eine Werkstückachse C1 bzw. C2 antreibbar. Die in der Fig. 1 sichtbare Werkstückspindel 21 befindet sich in einer Bearbeitungsposition, in der ein auf ihr aufgespanntes Werkstück 23 mit der Schleifschnecke 16 bearbeitet werden kann. Die andere, um 180° versetzt angeordnete und in der Fig.1 nicht sichtbare Werkstückspindel befindet sich in einer Werkstückwechselposition, in der ein fertig bearbeitetes Werkstück von dieser Spindel entnommen und ein neues Rohteil aufgespannt werden kann. Um 90° zu den Werkstückspindeln versetzt ist eine Abrichteinrichtung 30 montiert.

Die Maschine 1 weist somit eine Vielzahl beweglicher Komponenten wie Schlitten oder Spindeln auf, die durch entsprechende Antriebe gesteuert bewegbar sind. Diese Antriebe werden in der Fachwelt häufig als "NC-Achsen", "Maschinenachsen" oder verkürzt als "Achsen" bezeichnet. Teilweise schliesst diese Bezeichnung auch für die von den Antrieben angetriebenen Komponenten wie Schlitten oder Spindeln ein.

Die Maschine 1 weist des Weiteren eine Vielzahl von Sensoren auf. Beispielhaft sind in der Fig. 1 nur zwei Sensoren 18 und 19 schematisch angedeutet. Beim Sensor 18 handelt es sich um einen Beschleunigungssensor (Schwingungssensor) zur Erfassung von Schwingungen des Gehäuses der Schleifspindel 15. Der Sensor 19 ist ein Positionssensor zur Erfassung der Position des Axialschlittens 13 relativ zum Werkzeugträger 12 entlang der Z-Richtung. Darüber hinaus umfasst die Maschine 1 aber noch eine Vielzahl weiterer Sensoren. Unter diesen Sensoren befinden sich insbesondere weitere Positionssensoren zur Erfassung einer Ist-Position von jeweils einer Linearachse, Drehwinkelsensoren zur Erfassung einer Drehposition von jeweils einer Drehachse, Stromaufnehmer zur Erfassung eines Antriebsstroms von jeweils einer Achse und weitere Schwingungssensoren zur Erfassung von Schwingungen von jeweils einer angetriebenen Komponente.

Alle angetriebenen Achsen der Maschine 1 werden durch eine Maschinensteuerung 40 digital gesteuert. Die Maschinensteuerung 40 umfasst mehrere Achsmodule 41, einen Steuerrechner 42 und eine Bedientafel 43. Der Steuerrechner 42 empfängt Bedienerbefehle von der Bedientafel 43 sowie Sensorsignale von verschiedenen Sensoren der Maschine 1 und errechnet daraus Steuerbefehle für die Achsmodule 41. Er gibt des Weiteren Betriebsparameter an die Bedientafel 43 zur Anzeige aus. Die Achsmodule 41 stellen an ihren Ausgängen Steuersignale für jeweils eine Maschinenachse bereit.

Mit dem Steuerrechner 42 ist eine Überwachungseinrichtung 44 verbunden.

Die Überwachungseinrichtung 44 kann eine separate Hardware-Einheit sein, die der Maschine 1 zugordnet ist. Sie kann über eine an sich bekannte Schnittstelle mit dem Steuerrechner 42 verbunden sein, z.B. über den bekannten Profinet-Standard, oder über ein Netzwerk, z.B. über das Internet. Sie kann räumlich Teil der Maschine 1 sein, oder sie kann räumlich entfernt von der Maschine 1 angeordnet sein.

Die Überwachungseinrichtung 44 empfängt im Betrieb der Maschine eine Vielzahl unterschiedlicher Messdaten vom Steuerrechner 42. Unter den vom Steuerrechner empfangenen Messdaten befinden sich Sensordaten, die direkt vom Steuerrechner 42 erfasst wurden, und Daten, die der Steuerrechner 42 aus den Achsmodulen 41 ausliest, z.B. Daten, die die Sollpositionen der verschiedenen Maschinenachsen und die Soll-Stromaufnahmen in den Achsmodulen beschreiben.

Die Überwachungseinrichtung 44 kann optional eigene analoge und/oder digitale Sensoreingänge aufweisen, um direkt Sensordaten von weiteren Sensoren als Messdaten zu empfangen. Bei den weiteren Sensoren handelt es sich typischerweise um Sensoren, die nicht direkt für die Steuerung des eigentlichen Bearbeitungsprozesses benötigt werden, z.B. Beschleunigungssensoren, um Vibrationen zu erfassen, oder Temperatursensoren.

Die Überwachungseinrichtung 44 kann alternativ auch als Softwarekomponente der Maschinensteuerung 40 implementiert sein, die z.B. auf einem Prozessor des Steuerrechners 42 ausgeführt wird, oder sie kann als Softwarekomponente des nachstehend näher beschriebenen Diensteservers 45 ausgebildet sein. Der Diensteserver 45 weist einen nur schematisch angedeuteten Prozessor 451 und eine Speichereinrichtung 452 auf.

Die Überwachungseinrichtung 44 kommuniziert direkt oder über das Internet und einen Webserver 47 mit dem Diensteserver 45. Der Diensteserver 45 wiederum kommuniziert mit einem Datenbankserver 46 mit Datenbank DB. Diese Server können entfernt von der Maschine 1 angeordnet sein. Bei den Servern braucht es sich nicht um eine einzige physische Einheit zu handeln. Insbesondere können die Server als virtuelle Einheiten in der sogenannten "Cloud" realisiert sein.

Der Diensteserver 45 kommuniziert via den Webserver 47 mit einem Endgerät 48. Das Endgerät 48 kann insbesondere einen Webbrowser ausführen, mit dem die empfangenen Daten und ihre Auswertung visualisiert werden. Das Endgerät braucht keine besonderen Anforderungen an die Rechenleistung zu erfüllen. Beispielsweise kann es sich bei dem Endgerät um einen Desktopcomputer, einen Notebookcomputer, einen Tabletcomputer, ein Mobiltelefon usw. handeln.

### Bearbeitung eines Werkstückloses

Im Folgenden wird beschrieben, wie mit der Maschine 1 Werkstücke bearbeitet werden.

Um ein noch unbearbeitetes Werkstück (Rohteil) zu bearbeiten, wird das Werkstück durch einen automatischen Werkstückwechsler auf derjenigen Werkstückspindel aufgespannt, die sich in der Werkstückwechselposition befindet. Der Werkstückwechsel erfolgt zeitparallel zur Bearbeitung eines anderen Werkstücks auf der anderen Werkstückspindel, die sich in der Bearbeitungsposition befindet. Wenn das neu zu bearbeitende Werkstück aufgespannt ist und die Bearbeitung des anderen Werkstücks abgeschlossen ist, wird der Werkstückträger 20 um 180° um die C3-Achse geschwenkt, so dass die Spindel mit dem neu zu bearbeitenden Werkstück in die Bearbeitungsposition gelangt. Vor und/oder während des Schwenkvorgangs wird mit Hilfe der zugeordneten Einzentriersonde eine Einzentrieroperation durchgeführt. Dazu wird die Werkstückspindel 21 in Drehung versetzt, und die Lage der Zahnlücken des Werkstücks 23 wird mit Hilfe der Einzentriersonde 24 vermessen. Auf dieser Basis wird der Wälzwinkel festgelegt.

Wenn die Werkstückspindel, die das zu bearbeitende Werkstück 23 trägt, die Bearbeitungsposition erreicht hat, wird das Werkstück 23 durch Verschiebung des Werkzeugträgers 12 entlang der X-Achse kollisionsfrei mit der Schleifschnecke 16 in Eingriff gebracht. Das Werkstück 23 wird nun durch die Schleifschnecke 16 im Wälzeingriff bearbeitet. Während der Bearbeitung wird das Werkstück bei konstanter radialer X-Zustellung laufend entlang der Z-Achse vorgeschoben. Ausserdem wird die Werkzeugspindel 15 langsam kontinuierlich entlang der Shiftachse Y verschoben, um laufend noch unverbrauchte Bereiche der Schleifschnecke 16 bei der Bearbeitung zum Einsatz kommen zu lassen (sogenannte Shiftbewegung).

Zeitparallel zur Werkstückbearbeitung wird das fertig bearbeitete Werkstück von der anderen Werkstückspindel entnommen, und es wird ein weiteres Rohteil auf dieser Spindel aufgespannt.

Wenn nach der Bearbeitung einer bestimmten Zahl von Werkstücken die Nutzung der Schleifschnecke 16 so weit fortgeschritten ist, dass die Schleifschnecke zu stumpf und/oder die Flankengeometrie zu ungenau ist, dann wird die Schleifschnecke abgerichtet. Dazu wird der Werkstückträger 20 um ±90° geschwenkt, so dass die Abrichteinrichtung 30 in eine Stellung gelangt, in der sie der Schleifschnecke 16 gegenüber liegt. Die Schleifschnecke 16 wird nun mit dem Abrichtwerkzeug 33 abgerichtet. Das Abrichtwerkzeug ist hier eine rotierende Abrichtscheibe.

### Prüfzyklus der Verzahnmaschine

In Bearbeitungspausen wird durch die Überwachungseinrichtung 44 im Zusammenspiel mit der Maschinensteuerung 42 ein Prüfzyklus durchgeführt, mit dem der Zustand einzelner oder aller Komponenten der Maschine 1 überprüft wird. Während eines solchen Prüfzyklus werden ein ausgewählter Teil der Maschinenachsen oder alle Maschinenachsen systematisch betätigt, und es werden dabei Messungen an der Maschine durchgeführt.

Beispielsweise wird jede linear verschiebbare Komponente mit der zugeordneten Maschinenachse verschoben, und die momentane Position der Komponente wird mit Hilfe der vorstehend erwähnten Positionssensoren laufend bestimmt. Daraus wird laufend eine Lageabweichung zwischen der Vorgabe (Soll-Position) und der Messung (Ist-Position) ermittelt und an die Überwachungseinrichtung 44 übertragen. Dasselbe kann auch für die rotatorisch angetriebenen Spindeln erfolgen, wobei zur Ermittlung von Lageabweichungen dann Drehwinkelsensoren dienen.

Auch wird für ausgewählte Maschinenachsen das Schwingungsverhalten ermittelt, während die betreffende Maschinenachse aktiviert ist. Dazu dienen Beschleunigungssensoren (Schwingungssensoren), die mit diesen Komponenten verbunden sind. Auch die Ergebnisse der Schwingungsmessungen werden an die Überwachungseinrichtung 44 übertragen.

Des Weiteren wird laufend die Leistungsaufnahme der Antriebsmotoren der Maschinenachsen ermittelt, während diese aktiviert sind. Dazu können z.B. Stromsensoren dienen, die in die Achsmodule 41 integriert sind. Auch die Ergebnisse der Strommessungen werden an die Überwachungseinrichtung 44 übertragen.

All dies kann geschehen, während eine Maschinenachse alleine betätigt wird. Es ist aber auch möglich, zwei oder mehr Maschinenachsen gekoppelt zu betätigen, so dass das Verhalten der Maschine bei einer gleichzeitigen Ansteuerung von zwei oder mehr Maschinenachsen erfasst wird. Dabei können z.B. verstärkte Schwingungen auftreten, die grösser sind, als das allein aufgrund des Schwingungsverhaltens bei Betätigung einer einzigen Maschinenachse zu erwarten wäre, oder es können Reglerfehler erkannt werden, die sich erst bei synchroner Betätigung zweier Maschinenachsen feststellen lassen.

### Zustandsdaten

Die Überwachungseinrichtung 44 bestimmt aus den empfangenen Messdaten verschiedene Zustandsdaten. Die Zustandsdaten erlauben direkt oder indirekt Rückschlüsse auf den Zustand der Maschine bzw. ihrer einzelnen Komponenten. Die Zustandsdaten umfassen insbesondere Spektraldaten, die durch spektrale Analysen aus den Messdaten gewonnen wurden. Dabei können vollständige Spektren oder nur die spektralen Intensitäten bei ausgewählten diskreten Anregungsfrequenzen ermittelt werden.

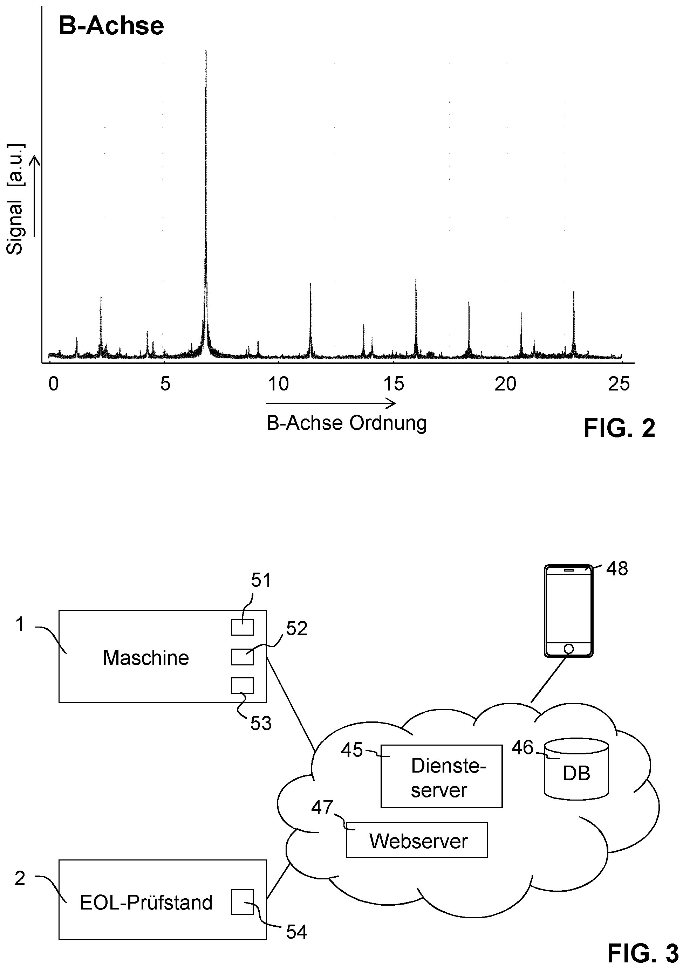

Die Fig. 2 zeigt beispielhaft ein Spektrum, das aus einem Zeitsignal eines Beschleunigungs-, Positions- oder Stromsensors, das während der Betätigung einer Maschinenachse (hier der B-Achse, d.h. der Werkzeugspindel) aufgenommen wurde, durch eine Filterung und FFT-Operation gewonnen werden kann. Das Spektrum der Fig. 2 enthält mehrere gut sichtbare Peaks bei ganzzahligen und nichtganzzahligen Vielfachen der Rotationsfrequenz (Ordnungen) der betreffenden Maschinenachse.

Beispielsweise können starke Peaks bei der Werkzeugdrehzahl und ihren Vielfachen auf Rundlauffehler an der Werkzeugspindel hindeuten. Peaks bei höheren Vielfachen der Werkzeugdrehzahl können auf einen Lagerschaden in der Werkzeugspindel hindeuten, wobei aus den Vielfachen unter Umständen auf die Lagerordnungen geschlossen werden kann. Wenn die Lagerordnungen bekannt sind, kann daraus unter Umständen das Lager, das die Peaks verursacht, identifiziert werden.

Die Überwachungseinrichtung 44 übermittelt die so gewonnenen Zustandsdaten an den Diensteserver 45.

### EOL-Prüfung

Die fertig bearbeiteten Werkstücke werden in jeweils ein Getriebe eingebaut. Das Getriebe wird vor der Auslieferung auf einem EOL-Prüfstand getestet. Das wird anhand der Fig. 3 näher erläutert.

Die Fig. 3 zeigt in stark schematischer Weise die Maschine 1 mit den verschiedenen Servern 45-47 und dem Endgerät 48, die vorstehend schon beschrieben wurden. Ebenfalls eingezeichnet ist ein stark schematisch dargestellter EOL-Prüfstand 2. Der EOL-Prüfstand kommuniziert via den Webserver 47 mit dem Diensteserver 45.

Wie schon erläutert, weist die Maschine 1 eine Vielzahl von Sensoren auf, darunter Beschleunigungssensoren (Schwingungssensoren) 51, Positionssensoren 52 und Stromsensoren 53. Wie ebenfalls schon erläutert, erfasst die Maschine mit diesen Sensoren Messdaten und sendet daraus abgeleitete Zustandsdaten an den Diensteserver 45.

Der EOL-Prüfstand weist ebenfalls eine Vielzahl von Sensoren auf, darunter Beschleunigungssensoren 54, mit denen Akustiksignale gemessen werden, während das eingebaute Werkstück im Getriebe auf einer Gegenverzahnung abwälzt, Drehwinkelsensoren usw.. Der EOL-Prüfstand berechnet daraus durch spektrale Analyse EOL-Daten und sendet diese ebenfalls an den Diensteserver 45.

### Diensteserver

Der Diensteserver 45 verarbeitet die empfangenen Daten, berechnet daraus ggfs. weitere Grössen, und speichert die empfangenen Daten und ggfs. die berechneten weiteren Grössen in der Datenbank DB ab. Insbesondere speichert der Diensteserver die folgenden Daten:
- Zustandsdaten mit zugehörigen Zustands-Identifikationsdaten, die eine eindeutige Identifikation der Maschine, an der die Zustandsdaten ermittelt wurden, und der zugehörigen Operation im Prüfzyklus (insbesondere der betätigten Maschinenachse) erlauben, sowie Zeitpunkt des Prüfzyklus;
- Prozessdaten des Bearbeitungsprozesses für jedes Werkstück, gemeinsam mit Werkstück-Identifikationsdaten, die eine eindeutige Identifikation des Werkstücks erlauben;
- EOL-Daten aus dem EOL-Prüfstand, gemeinsam mit den zugehörigen Werkstück-Identifikationsdaten.

Der Diensteserver kann Daten aus der Datenbank auslesen und zusammenführen. Insbesondere kann der Diensteserver EOL-Daten für ein bestimmtes Werkstück mit den zugehörigen Prozessdaten und denjenigen Zustandsdaten der Maschine, die den Maschinenzustand zum Bearbeitungszustand am Besten charakterisieren, zu jeweils einem Datensatz zusammenführen.

### Vorhersage von störenden Geräuschanregungen im EOL-Spektrum auf Basis von kinematischen Verknüpfungen

Der Diensteserver kann eine qualitative Vorhersage der Intensitäten von Störordnungen auf dem EOL-Prüfstand vornehmen. Dazu berechnet der Diensteserver aus dem Spektrum der Fig. 2 ein entsprechendes erwartetes Anregungsspektrum auf dem EOL-Prüfstand (EOL-Spektrum).

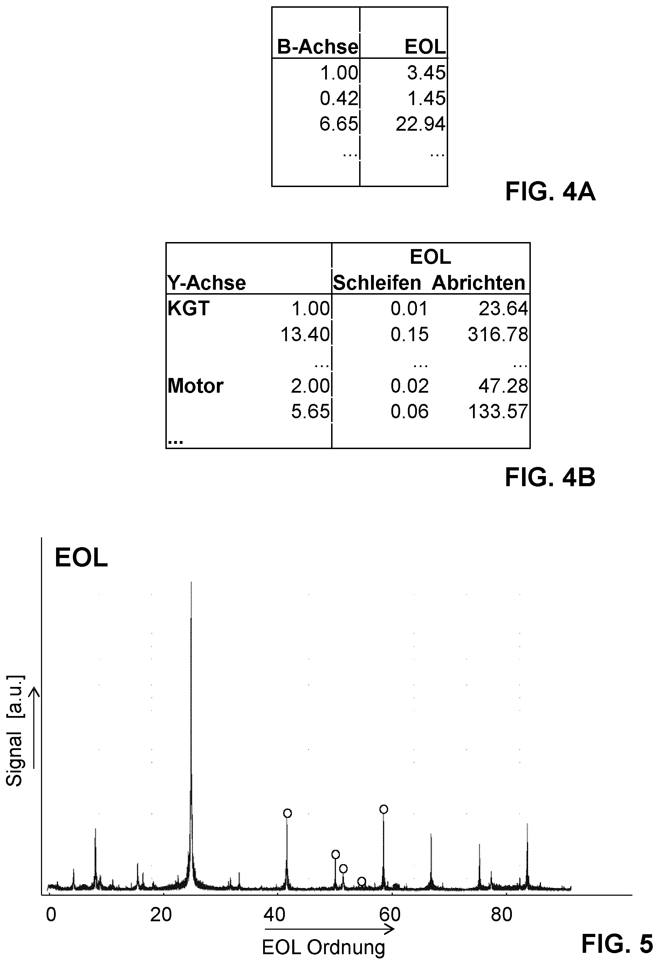

Bei der Berechnung nutzt der Diensteserver die bekannten kinematischen Verknüpfungen zwischen den Komponenten der Maschine 1 aus. Das wird anhand der Figuren 4A und 4B näher erläutert.

Die Fig. 4A zeigt beispielhaft einen Ausschnitt aus einer Tabelle, in der bekannte mögliche Störordnungen der B-Achse (d.h. der Werkzeugspindel) und die entsprechenden erwarteten Störordnungen im EOL-Spektrum eingetragen sind. Im vorliegenden Beispiel stehen diese Störordnungen in einem festen Verhältnis 3.45, das durch die kinematische Verknüpfung zwischen Werkzeugspindel und Werkstück, also durch die Wälzkopplung zwischen Werkzeug und Werkstück vorgegeben ist und durch die Geometrie des Werkstücks und der Schleifschnecke bestimmt ist. Bildlich gesprochen gibt das Verhältnis an, wie sich Schwingungen der B-Achse in Welligkeiten auf den Zahnflanken des Werkstücks übertragen. Das genannte Verhältnis lässt sich unter Berücksichtigung der Eingriffsverhältnisse zwischen Schleifschnecke und Werkstück berechnen. Es wird im Folgenden als "Übertragungsfaktor" bezeichnet. Die möglichen Störordnungen der B-Achse lassen sich bei Kenntnis der Ordnungen der Komponenten der B-Achse, z.B. Lagerordnungen und Motorordnungen, vorab berechnen. Reale Störordnungen der B-Achse lassen sich durch Messungen bestimmten.

Die Fig. 4B zeigt beispielhaft einen Ausschnitt aus einer Tabelle, in der mögliche Störordnungen der Y-Achse (d.h. der Shiftachse) und die entsprechenden erwarteten Störordnungen im EOL-Spektrum eingetragen sind. Dabei unterscheidet die Tabelle einerseits zwischen unterschiedlichen Komponenten der Y-Achse, z.B. Kugelgewindetrieb KGT und Antriebsmotor, die diese Störordnungen verursachen können, und andererseits zwischen Störordnungen im EOL-Spektrum aufgrund von Schwingungen bei der Werkstückbearbeitung (Schleifen) und beim Abrichten. Schwingungen beim Schleifen führen direkt zu Flankenwelligkeiten auf den Werkstückflanken. Schwingungen beim Abrichten äussern sich zunächst als Flankenwelligkeiten auf der Schleifschnecke und werden von dort beim Schleifen ebenfalls in Flankenwelligkeiten auf den Werkstückflanken übersetzt. Die entsprechenden Übertragungsfaktoren zwischen möglichen Störordnungen der Y-Achse und resultierenden Störordnungen im EOL-Spektrum lassen sich bei Kenntnis der kinematischen Verknüpfungen und der Bearbeitungsparameter beim Schleifen und Abrichten ebenfalls leicht berechnen. Die möglichen Störordnungen der Y-Achse lassen sich wiederum entweder messen oder berechnen.

Diese Art von Analyse von möglichen Störordnungen einer Maschinenachse und den resultierenden Störordnungen im EOL-Spektrum lässt sich für jede am Schleifprozess beteiligte Maschinenachse durchführen.

Die Vorhersage eines EOL-Spektrums erfolgt nun auf der Basis der Spektren, die im Prüfzyklus an der Maschine bestimmt wurden, und der bekannten Übertragungsfaktoren zwischen Störordnungen der Maschinenachsen und zugeordneten Störordnungen im EOL-Spektrum. Das wird anhand der Fig. 5 näher erläutert. Die Fig. 5 zeigt ein vorhergesagtes EOL-Spektrum, das erwartet wird, wenn die Prüfung der B-Achse im Prüfzyklus das Spektrum der Fig. 2 ergeben hat. Das vorhergesagte EOL-Spektrum entspricht im Wesentlichen dem Spektrum der Fig. 2, ist aber entlang der horizontalen Achse um den oben schon beispielhaft genannten Übertragungsfaktor 3.45 gestreckt. Allerdings sind die absoluten Signalwerte in diesem EOL-Spektrum mit Vorsicht zu betrachten: Wie stark ein EOL-Signal bei einer gegebenen Störordnung tatsächlich sein wird, hängt nämlich nicht nur mit der Stärke der entsprechenden Störordnung der verursachenden Maschinenachse, sondern auch mit einer Vielzahl weiterer Faktoren während der Werkstückbearbeitung und den Einbauverhältnissen des Werkstücks im Getriebe zusammen. Insofern erlaubt das Spektrum der Fig. 5 keine quantitativen Aussagen über erwartete Signalstärken. Es erlaubt aber eine Vorhersage, welche Störordnungen im EOL-Spektrum aufgrund der vorhandenen Störordnungen im Spektrum der betreffenden Maschinenachse überhaupt vorhanden sein werden, und es erlaubt eine qualitative Abschätzung der erwarteten Signalstärken bei diesen Störordnungen. Beispielsweise erlaubt das Spektrum der Fig. 5 eine grobe Abschätzung der Signalstärken bei bestimmten interessierenden Störordnungen, die als besonders unangenehm empfundene Geräusche verursachen. Solche Störordnungen sind in der Fig. 5 beispielhaft mit einem Kreis gekennzeichnet.

Insgesamt kann so eine gute Vorhersage getroffen werden, welche Störordnungen mit ungefähr welchen Signalstärken aufgrund welcher Ursachen im EOL-Spektrum zu erwarten sind.

Beispielsweise kann ein verschlissenes Lager der Werkzeugspindel Vibrationen der Werkzeugspindel verursachen, wobei die Ordnungen dieser Vibrationen (bezogen auf die Werkzeugrotation) durch die Lagerordnungen bestimmt sind. Die Lagerordnungen ergeben sich aus der Konstruktion des Lagers und können häufig beim Lagerhersteller in Erfahrung gebracht werden. Daher können Vibrationen, die in einem Prüfzyklus gemessen werden, unter Umständen direkt auf das verschlissene Lager zurückgeführt werden. Diese Vibrationen können z.B. durch einen Beschleunigungssensor am Gehäuse der Werkstückspindel gemessen werden. Die Vibrationen werden durch den Bearbeitungsvorgang auf die Werkstücke übertragen und äussern sich dort als periodische Abweichungen (Welligkeiten) auf der Zahnflanke. Diese Welligkeiten äussern sich nach dem Einbau in ein Getriebe als Geräuschanregungen, wenn die Werkstückverzahnung auf einer Gegenverzahnung abwälzt. Welche Ordnung, bezogen auf die Werkstückrotation im Getriebe, diese Geräuschanregungen haben werden, lässt sich anhand der vorstehenden Überlegungen leicht berechnen. Auf diese Weise ist es möglich zu berechnen, wie sich das verschlissene Lager im Geräuschspektrum eines Getriebes auswirken wird.

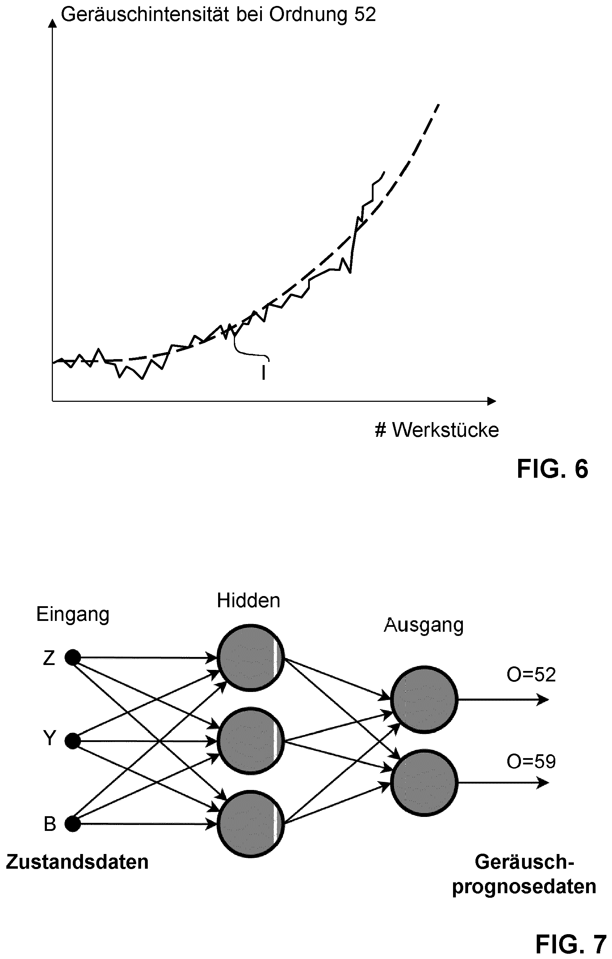

Zwar erlaubt das berechnete Spektrum der Fig. 5 alleine noch keine quantitativen Aussagen über erwartete Signalstärken. Indem man beobachtet, wie sich dieses erwartete Spektrum von Prüfzyklus zu Prüfzyklus verändert, kann aber eine sehr gute Abschätzung getroffen werden, welche Störordnungen sich in welcher Weise verändern. Das wird nachstehend anhand der Fig. 6 beispielhaft erläutert. Die Fig. 6 zeigt ein Diagramm, in dem die erwartete spektrale Intensität I im EOL-Prüfstand bei einer bestimmten Ordnung (hier der Ordnung 52) als Funktion der Zahl der mit der Maschine bearbeiteten Werkstücke dargestellt ist. Man erkennt, dass sich die erwartete Geräuschintensität mit der Zeit stark erhöht. Durch Fit an eine geeignete Regressionsfunktion (hier eine quadratische Regressionsfunktion) kann dieser Anstieg quantitativ erfasst werden, und abhängig von den ermittelten Regressionsparametern kann eine geeignete Aktion ausgelöst werden, z.B. ein Warnsignal ausgegeben werden. Die zeitliche Entwicklung der erwarteten Signalstärken bei den verschiedenen EOL-Ordnungen kann zudem auf geeignete Weise visualisiert werden. Das ermöglicht auch unerfahrenen Benutzern die Interpretation von Geräuschproblemen.

### Identifikation von Störquellen auf Basis von kinematischen Verknüpfungen

Auch der umgekehrte Weg ist möglich: Wenn ein EOL-Spektrum durch Messungen am EOL-Prüfstand ermittelt wurde, kann anhand der obigen Überlegungen eine Abschätzung getroffen werden, welche Maschinenachsen und ggfs. sogar welche Komponenten einer Maschinenachse die Störordnungen im gemessenen EOL-Spektrum verursacht haben. Dazu wird zurückgerechnet, welchen Ordnungen von Maschinenachsen den Störordnungen im gemessenen EOL-Spektrum entsprechen, und es wird diejenige Komponente gesucht, deren erwartete Störordnungen im Spektrum einer Maschinenachse den so zurückgerechneten Ordnungen entsprechen. Dieser Prozess lässt sich leicht automatisieren.

### Vorgehen ohne Kenntnis der kinematischen Verknüpfungen

Wenn die kinematischen Verknüpfungen des Antriebsstrangs nicht bekannt sind oder aus anderen Gründen nicht für eine Berechnung eingesetzt werden sollen, ist es möglich, eine Vorhersage von Signalintensitäten bei bestimmten EOL-Störordnungen oder eine Identifikation von Störquellen mit Hilfe eine maschinellen Lernalgorithmus (ML-Algorithmus) durchzuführen.

Das wird nachstehend anhand der Fig. 7 erläutert. Diese stellt eine stark vereinfachte Prinzipskizze eines künstlichen neuronalen Netzwerks (artificial neural network, ANN) dar. Im vorliegenden Beispiel hat dieses Netzwerk nur drei Eingänge und zwei Ausgänge sowie nur eine einzige verborgene Schicht ("hidden layer"). In der Realität wird ein ANN meist mehr Eingänge, Ausgänge und verborgene Schichten aufweisen.

Im vorliegenden Beispiel werden dem ANN an den Eingängen Zustandsdaten zugeführt, die jeweils die Schwingungsneigung einer der Achsen B, Y und Z der Maschine charakterisieren. Das ANN berechnet daraus prognostizierte EOL-Spektraldaten in Form von erwarteten spektralen Intensitäten bei zwei bestimmten EOL-Ordnungen, hier die Ordnungen 52 und 59.

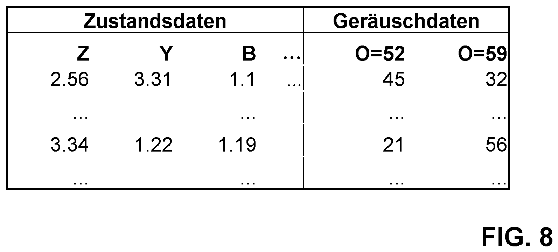

Das ANN wurde zuvor mit Trainingsdaten trainiert. In der Fig. 8 ist beispielhaft ein Ausschnitt aus solchen Trainingsdaten illustriert. Die Fig. 8 zeigt eine Tabelle, in der einerseits Zustandsdaten eingetragen sind, die aus vielen Prüfzyklen der Maschine ermittelt wurden. Andererseits sind EOL-Daten in Form von spektralen Intensitäten bei den Ordnungen 52 und 59 eingetragen, die durch EOL-Messungen an Getrieben gewonnen wurden. In diese Getriebe wurden Werkstücke eingebaut, die mit der Maschine bearbeitet wurden, als sie sich in dem Zustand befand, in dem die Zustandsdaten ermittelt wurden (d.h., kurz vor und/oder nach dem jeweiligen Prüfzyklus). Die Tabelle enthält sehr viele Zeilen dieser Art. Sie kann aus der Datenbank DB der Figuren 1 und 3 gewonnen werden. Das ANN wurde mit diesen Daten auf an sich bekannte Weise trainiert. Dadurch ist es in der Lage, zuverlässig vorherzusagen, welche Zustände der Maschine (repräsentiert durch Zustandsdaten) zu welchen EOL-Intensitäten bei den genannten Ordnungen führen werden.

Auch die umgekehrte Richtung ist möglich: Die Eingangsgrössen eines entsprechenden ANN können EOL-Daten sein, und die Ausgangsdaten können prognostizierte Zustandsdaten sein.

Selbstverständlich ist das vorstehende Beispiel stark vereinfacht, es demonstriert aber die grundsätzliche Vorgehensweise. Statt eines ANN können auch andere Arten von ML-Algorithmen zum Einsatz kommen, insbesondere andere bekannten Klassifikatoren.

### Ausgabe der Ergebnisse und Visualisierung

Die Visualisierung der Ergebnisse dieser Analysen kann plattformunabhängig auf einem beliebigen Clientrechner über einen Webbrowser erfolgen. Auch andere Auswertungsmassnahmen können entsprechend plattformunabhängig realisiert werden. Dadurch wird eine Analyse auch aus der Ferne erleichtert. Insbesondere kann von einem beliebigen mobilen Endgerät aus über die Cloud der Zustand von beliebigen Maschinen detailliert überprüft werden.

Zusätzlich ist es denkbar, beim Vorliegen von Zuständen, die ein Eingreifen erfordern, eine entsprechende Meldung automatisiert per SMS, Push-Mitteilung oder E-Mail zu versenden.

## Patentansprüche

1. Verfahren zur Überwachung eines Zustands einer Verzahnmaschine mit einer Mehrzahl von Maschinenachsen, **dadurch gekennzeichnet, dass** das Verfahren die folgenden Schritte aufweist:
a) Durchführen eines Prüfzyklus, wobei in dem Prüfzyklus mindestens ein Teil der Maschinenachsen systematisch betätigt wird und zugeordnete Maschinenmessdaten ermittelt werden;
b) Durchführen einer spektralen Analyse der Maschinenmessdaten, bei der aus den Maschinenmessdaten Maschinenspektraldaten berechnet werden;
c) Ermitteln von prognostizierten EOL-Spektraldaten basierend auf den Maschinenspektraldaten, wobei die prognostizierten EOL-Spektraldaten angeben, bei welchen Ordnungen Anregungen in einem EOL-Spektrum zu erwarten sind, wenn ein mit der Verzahnmaschine bearbeitetes Werkstück in ein Getriebe eingebaut ist und im Getriebe auf einer Gegenverzahnung abwälzt; und
d) optional, Ausgeben der prognostizierten EOL-Spektraldaten oder mindestens einer davon abgeleiteten Grösse.

2. Verfahren nach Anspruch 1, wobei die Ermittlung der prognostizierten EOL-Spektraldaten eine Anwendung eines Übertragungsfaktors auf die Maschinenspektraldaten umfasst, wobei der Übertragungsfaktor von einer kinematischen Verknüpfung zwischen der Maschinenachse, für die die Maschinenspektraldaten bestimmt wurden, und dem Werkstück abhängt.

3. Verfahren nach Anspruch 1 oder 2, wobei die prognostizierten EOL-Spektraldaten einzeln pro betätigter Maschinenachse ermittelt werden.

4. Verfahren nach einem der vorhergehenden Ansprüche,
wobei die Schritte a) bis c) mehrfach wiederholt werden,
wobei zwischen den Prüfzyklen mit der Verzahnmaschine Werkstücke bearbeitet werden und die Prüfzyklen in Bearbeitungspausen durchgeführt werden, in denen sich das Bearbeitungswerkzeug nicht in einem Bearbeitungseingriff mit einem Werkstück befindet, und
wobei eine Entwicklung der prognostizierten EOL-Spektraldaten als Funktion der durchgeführten Prüfzyklen, der bearbeiteten Werkstücke oder der Zeit visualisiert und/oder analysiert wird, insbesondere durch eine Regressionsanalyse.

5. Verfahren nach einem der vorhergehenden Ansprüche,
wobei Referenz-Maschinenspektraldaten für eine Mehrzahl von Referenzmaschinen vorliegen, die durch eine Mehrzahl auf den Referenzmaschinen ausgeführten Referenz-Prüfzyklen ermittelt wurden,
wobei aus den Referenz-Maschinenspektraldaten prognostizierte Referenz-EOL-Spektraldaten ermittelt werden,
wobei die prognostizierten EOL-Spektraldaten, die basierend auf den Maschinenspektraldaten der überwachten Verzahnmaschine ermittelt wurden, mit den prognostizierten Referenz-EOL-Spektraldaten oder daraus abgeleiteten Grössen verglichen werden,
wobei das Verfahren optional eine statistische Analyse der prognostizierten Referenz-EOL-Spektraldaten umfasst.

6. Verfahren zur Überwachung eines Zustands einer Verzahnmaschine mit einer Mehrzahl von Maschinenachsen, **dadurch gekennzeichnet, dass** das Verfahren die folgenden Schritte aufweist:
a) Durchführen einer EOL-Prüfung an einem Getriebe, das ein mit der Verzahnmaschine bearbeitetes Werkstück enthält, wobei in der EOL-Prüfung das Werkstück im Getriebe auf einer Gegenverzahnung abwälzt und zugeordnete EOL-Messdaten ermittelt werden;
b) Durchführen einer spektralen Analyse der EOL-Messdaten, bei der aus den EOL-Messdaten EOL-Spektraldaten berechnet werden;
c) Ermitteln von prognostizierten Zustandsdaten basierend auf den EOL-Spektraldaten, wobei die prognostizierten Zustandsdaten für mindestens eine Maschinenachse angeben, welche Ordnungen dieser Maschinenachse mit den berechneten EOL-Spektraldaten konsistent sind; und
d) optional, Ausgeben der prognostizierten Zustandsdaten oder mindestens einer davon abgeleiteten Grösse.

7. Verfahren nach Anspruch 6, welches zusätzlich umfasst:
e) Durchführen eines Prüfzyklus, in dem mindestens ein Teil der Maschinenachsen systematisch betätigt wird und zugeordnete Maschinenmessdaten ermittelt werden;
f) Durchführen einer spektralen Analyse der Maschinenmessdaten, bei der aus den Maschinenmessdaten Maschinenspektraldaten berechnet werden; und
g) Ermitteln von prognostizierten EOL-Spektraldaten basierend auf den Maschinenspektraldaten, wobei die prognostizierten EOL-Spektraldaten angeben, bei welchen Ordnungen Anregungen in einem EOL-Spektrum zu erwarten sind, wenn ein mit der Verzahnmaschine bearbeitetes Werkstück in ein Getriebe eingebaut ist und im Getriebe auf einer Gegenverzahnung abwälzt,
wobei das Ermitteln der prognostizierten Zustandsdaten einen Vergleich der EOL-Spektraldaten, die aus den EOL-Messdaten berechnet wurden, mit den prognostizierten EOL-Spektraldaten umfasst.

8. Verfahren zum Erstellen eines Trainingsdatensatzes eines maschinellen Lernalgorithmus zur Verwendung in einem Verfahren zur Überwachung eines Zustands einer Verzahnmaschine mit einer Mehrzahl von Maschinenachsen, **dadurch gekennzeichnet, dass** das Verfahren umfasst:
a) Durchführen eines Prüfzyklus, bei dem mindestens ein Teil der Maschinenachsen systematisch betätigt wird und zugeordnete Zustandsdaten durch Messungen ermittelt werden;
b) Bearbeiten mindestens eines Werkstücks mit der Verzahnmaschine, während sich die Verzahnmaschine in einem Zustand befindet, der durch die Zustandsdaten charakterisiert ist;
c) Einbau des bearbeiteten Werkstücks in ein Getriebe;
d) Durchführen einer EOL-Prüfung an dem Getriebe, wobei in der EOL-Prüfung das Werkstück im Getriebe auf einer Gegenverzahnung abwälzt und zugeordnete EOL-Daten ermittelt werden;
e) Speichern der Zustandsdaten und der korrespondierenden EOL-Daten im Trainingsdatensatz;
f) Wiederholen der Schritte a) bis e) für eine Vielzahl von Prüfzyklen und bearbeitete Werkstücke, wobei die Werkstücke die gleiche Soll-Geometrie aufweisen und unter den gleichen Bearbeitungsbedingungen bearbeitet werden,
wobei der maschinelle Lernalgorithmus vorzugsweise ein Klassifikationsalgorithmus, insbesondere ein künstliches neuronales Netz oder eine Support Vector Machine, oder ein Random Forest ist.

9. Verfahren zum Trainieren eines maschinellen Lernalgorithmus zur Verwendung in einem Verfahren zur Überwachung eines Zustands einer Verzahnmaschine mit einer Mehrzahl von Maschinenachsen, **dadurch gekennzeichnet, dass** der maschinelle Lernalgorithmus mit dem Trainingsdatensatz des Anspruchs 8 trainiert wird.

10. Verfahren zur Überwachung eines Zustands einer Verzahnmaschine mit einer Mehrzahl von Maschinenachsen,
**dadurch gekennzeichnet, dass** in dem Verfahren ein maschineller Lernalgorithmus eingesetzt wird, der mit dem Trainingsdatensatz des Anspruchs 8 trainiert wurde.

11. Verfahren nach Anspruch 10,
wobei der maschinelle Lernalgorithmus als Eingangsgrössen Zustandsdaten der Verzahnmaschine und als Ausgangsgrössen prognostizierte EOL-Daten aufweist,
wobei das Verfahren aufweist:
a) Durchführen eines Prüfzyklus, wobei in dem Prüfzyklus mindestens ein Teil der Maschinenachsen systematisch betätigt wird und zugeordnete Zustandsdaten durch Messungen ermittelt werden;
b) Ermitteln von prognostizierten EOL-Daten basierend auf den Zustandsdaten, indem die Zustandsdaten dem trainierten ML-Algorithmus als Eingangsgrössen zugeführt werden; und
c) optional, Ausgeben der prognostizierten EOL-Spektraldaten oder mindestens einer davon abgeleiteten Grösse.

12. Verfahren nach Anspruch 10,
wobei der maschinelle Lernalgorithmus als Eingangsgrössen EOL-Daten und als Ausgangsgrössen prognostizierte Zustandsdaten der Verzahnmaschine aufweist, und
wobei das Verfahren aufweist:
a) Durchführen einer EOL-Prüfung an dem Getriebe, wobei in der EOL-Prüfung das Werkstück im Getriebe auf einer Gegenverzahnung abwälzt und zugeordnete EOL-Daten ermittelt werden;
b) Ermitteln von prognostizierten Zustandsdaten basierend auf den EOL-Daten, indem die EOL-Daten dem trainierten ML-Algorithmus als Eingangsgrössen zugeführt werden; und
c) optional, Ausgeben der prognostizierten Zustandsdaten oder mindestens einer davon abgeleiteten Grösse.

13. Verfahren nach einem der Ansprüche 8-12,
wobei die Zustandsdaten mit einem Zustand einer Maschinenachse hinsichtlich ihres Schwingungsverhaltens korrelieren und insbesondere Maschinenspektraldaten umfassen, die durch eine spektrale Analyse von Maschinenmessdaten berechnet wurden, und/oder
wobei die EOL-Daten mit dem Geräuschverhalten des Getriebes korrelieren und insbesondere EOL-Spektraldaten umfassen, die durch eine spektrale Analyse von EOL-Messdaten berechnet wurden.

14. Vorrichtung zur Überwachung eines Zustands einer Verzahnmaschine mit einer Mehrzahl von Maschinenachsen, aufweisend einen Prozessor (451) und ein Speichermedium (452), auf dem ein Computerprogramm gespeichert ist, **dadurch gekennzeichnet, dass** das Computerprogramm bei seiner Ausführung auf dem Prozessor die Ausführung der folgenden Schritte bewirkt:
Empfangen von Zustandsdaten, die durch einen Prüfzyklus der Verzahnmaschine ermittelt wurden, wobei in dem Prüfzyklus mindestens ein Teil der Maschinenachsen systematisch betätigt wurde und die zugeordneten Zustandsdaten durch Messungen ermittelt wurden; und
Ermitteln von prognostizierten EOL-Daten, die mit einem Geräuschverhalten eines Getriebes, das ein mit der Verzahnmaschine bearbeitetes Werkstück enthält, korrelieren, basierend auf den Zustandsdaten.

15. Vorrichtung zur Überwachung eines Zustands einer Verzahnmaschine mit einer Mehrzahl von Maschinenachsen, aufweisend einen Prozessor (451) und ein Speichermedium (452), auf dem ein Computerprogramm gespeichert ist, **dadurch gekennzeichnet, dass** das Computerprogramm bei seiner Ausführung auf dem Prozessor die Ausführung der folgenden Schritte bewirkt:
Empfangen von EOL-Daten, die durch eine EOL-Prüfung an einem Getriebe, das ein mit der Verzahnmaschine bearbeitetes Werkstück enthält, ermittelt wurden, wobei in der EOL-Prüfung das Werkstück im Getriebe auf einer Gegenverzahnung abwälzte und die zugeordneten EOL-Daten ermittelt wurden; und
Ermitteln von prognostizierten Zustandsdaten, die mit einem Zustand mindestens einer Maschinenachse hinsichtlich ihres Schwingungsverhaltens korrelieren, basierend auf den EOL-Daten.

## Claims

1. A method of monitoring a condition of a gear cutting machine having a plurality of machine axes, **characterized in that** the method comprises the steps of:
a) performing a test cycle, wherein in the test cycle at least a portion of the machine axes is systematically actuated and associated machine measurement data are obtained;
b) performing a spectral analysis of the machine measurement data, wherein machine spectral data are calculated from the machine measurement data;
c) determining predicted EOL spectral data based on the machine spectral data, wherein the predicted EOL spectral data indicate at which orders excitations are to be expected in an EOL spectrum when a workpiece machined with the gear cutting machine is installed in a gear train and rolls off on a mating gear in the gear train; and
d) optionally, outputting the predicted EOL spectral data or at least one quantity derived therefrom.

2. The method according to claim 1, wherein determining the predicted EOL spectral data comprises applying a propagation factor to the machine spectral data, the propagation factor depending on a kinematic linkage between the machine axis for which the machine spectral data was determined and the workpiece.

3. The method according to claim 1 or 2 wherein the predicted EOL spectral data are determined individually per actuated machine axis.

4. The method according to any of the preceding claims,
wherein steps a) to c) are repeated several times,
wherein workpieces are machined with the gear cutting machine between the test cycles and the test cycles are performed in machining pauses in which the machining tool is not in a machining engagement with a workpiece, and
wherein a development of the predicted EOL spectral data as a function of the test cycles performed, the workpieces machined or the time is visualized and/or analyzed, in particular by a regression analysis.

5. The method according to any of the preceding claims,
wherein reference machine spectral data are available for a plurality of reference machines, the reference machine spectral data having been determined by a plurality of reference test cycles performed on the reference machines,
wherein predicted reference EOL spectral data are determined from the reference machine spectral data,
wherein the predicted EOL spectral data, which have been determined based on the machine spectral data of the monitored gear cutting machine, are compared to the predicted reference EOL spectral data or quantities derived therefrom,
wherein the method optionally comprises a statistical analysis of the predicted reference EOL spectral data.

6. A method of monitoring a condition of a gear cutting machine having a plurality of machine axes, **characterized in that** the method comprises the steps of:
a) performing an EOL test on a gear train comprising a workpiece machined by the gear cutting machine, wherein in the EOL test the workpiece in the gear train rolls off on a mating gear and associated EOL measurement data are determined;
b) performing a spectral analysis of the EOL measurement data, wherein EOL spectral data from the EOL measurement data are calculated;
c) determining predicted condition data based on the EOL spectral data, wherein the predicted condition data for at least one machine axis indicates which orders of that machine axis are consistent with the calculated EOL spectral data; and
d) optionally, outputting the predicted condition data or at least one quantity derived therefrom.

7. The method according to claim 6, further comprising:
e) performing a test cycle in which at least a portion of the machine axes are systematically actuated and associated machine measurement data are obtained;
f) performing a spectral analysis of the machine measurement data, wherein machine spectral data are calculated from the machine measurement data; and
g) determining predicted EOL spectral data based on the machine spectral data, wherein the predicted EOL spectral data indicate at which orders excitations are to be expected in an EOL spectrum when a workpiece machined by the gear cutting machine is installed in a gear train and rolls off on a mating gear in the gear train,
wherein determining the predicted condition data comprises comparing the EOL spectral data calculated from the EOL measurement data to the predicted EOL spectral data.

8. A method for creating a training data set of a machine learning algorithm for use in a method of monitoring a condition of a gear cutting machine having a plurality of machine axes, **characterized in that** the method comprises:
a) performing a test cycle in which at least a portion of the machine axes is systematically actuated and associated condition data are determined by measurements;
b) machining at least one workpiece with the gear cutting machine while the gear cutting machine is in a condition that corresponds to the condition data;
c) installing the machined workpiece in a gear train;
d) performing an EOL test on the gear train, wherein in the EOL test the workpiece in the gear train rolls off on a mating gear and associated EOL data are determined;
e) storing the condition data and the corresponding EOL data in the training data set;
f) repeating steps a) to e) for a plurality of test cycles and machined workpieces, wherein the workpieces have the same nominal geometry and are machined under the same machining conditions,
wherein the machine learning algorithm is preferably a classification algorithm, in particular an artificial neural network or a support vector machine, or a random forest.

9. A method of training a machine learning algorithm for use in a method of monitoring a condition of a gear cutting machine having a plurality of machine axes, **characterized in that** the machine learning algorithm is trained using the training data set according to claim 8.

10. A method of monitoring a condition of a gear cutting machine with a plurality of machine axes,
**characterized in that** a machine learning algorithm trained with the training data set according to claim 8 is used in the method.

11. The method according to claim 10,
wherein the machine learning algorithm has condition data of the gear cutting machine as input variables and predicted EOL data as output variables,
the method comprising:
a) performing a test cycle, wherein in the test cycle at least a portion of the machine axes is systematically actuated and associated condition data are determined by measurements;
b) determining predicted EOL data based on the condition data by feeding the condition data to the trained ML algorithm as input variables; and
c) optionally, outputting the predicted EOL spectral data or at least one quantity derived therefrom.

12. The method according to claim 10,
wherein the machine learning algorithm has EOL data as input variables and predicted condition data of the gear cutting machine as output variables,
the method comprising:
a) performing an EOL test on the gear train, wherein in the EOL test the workpiece in the gear train rolls off on a mating gear and associated EOL data are determined;
b) determining predicted condition data based on the EOL data by feeding the EOL data to the trained ML algorithm as input variables; and
c) optionally, outputting the predicted condition data or at least one quantity derived therefrom.

13. The method according to any one of claims 8-12,
wherein the condition data correlate with a condition of a machine axis with respect to its vibration behavior and, in particular, comprise machine spectral data calculated by a spectral analysis of machine measurement data, and/or
wherein the EOL data correlate with the noise behavior of the gear train and, in particular, comprise EOL spectral data calculated by spectral analysis of EOL measurement data.

14. A device for monitoring a condition of a gear cutting machine having a plurality of machine axes, comprising a processor (451) and a storage medium (452) on which is stored a computer program which, when executed on the processor, causes the following steps to be performed:
receiving condition data determined by a test cycle of the gear cutting machine, wherein in the test cycle at least a portion of the machine axes has been systematically actuated and the associated condition data have been determined by measurements; and
determining predicted EOL data correlated with a noise behavior of a gear train comprising a workpiece machined with the gear cutting machine, based on the condition data.

15. A device for monitoring a condition of a gear cutting machine having a plurality of machine axes, comprising a processor (451) and a storage medium (452) on which is stored a computer program **characterized in that** the computer program, when executed on the processor, causes the following steps to be performed:
receiving EOL data determined by an EOL test on a gear train comprising a workpiece machined by the gear cutting machine, wherein in the EOL test the workpiece in the gear train rolls off on a mating gear and the associated EOL data was determined; and
determining predicted condition data that correlates with a condition of at least one machine axis in terms of its vibration behavior, based on the EOL data.

## Revendications

1. Procédé de surveillance de l'état d'une machine à usiner les engrenages comprenant une pluralité d'axes de machine, **caractérisé en ce que** le procédé comprend les étapes suivantes :
a) réalisation d'un cycle de contrôle, dans lequel au moins une partie des axes de la machine est actionnée systématiquement et des données de mesure de la machine sont déterminées ;
b) réalisation d'une analyse spectrale des données de mesure de la machine, dans laquelle des données spectrales de la machine sont calculées à partir des données de mesure de la machine ;
c) détermination de données spectrales EOL pronostiquées sur la base des données spectrales de la machine, les données spectrales EOL pronostiquées indiquant à quels ordres des excitations sont à prévoir dans un spectre EOL lorsqu'une pièce usinée avec la machine à usiner les engrenages est montée dans un engrenage et roule sur une contre-denture dans l'engrenage ; et
d) facultativement, mettre à disposition les données spectrales EOL pronostiquées ou au moins une grandeur dérivée de celles-ci.

2. Procédé selon la revendication 1, dans lequel la détermination des données spectrales EOL pronostiquées comprend l'application d'un facteur de transfert aux données spectrales de la machine, le facteur de transfert dépendant d'une liaison cinématique entre l'axe de la machine pour lequel les données spectrales de la machine ont été déterminées et la pièce.

3. Procédé selon la revendication 1 ou 2, dans lequel les données spectrales EOL pronostiquées sont déterminées individuellement pour chaque axe de machine actionné.

4. Procédé selon l'une quelconque des revendications précédentes,
les étapes a) à c) étant répétées plusieurs fois,
les pièces étant usinées entre les cycles de contrôle avec la machine à usiner les engrenages et les cycles de contrôle étant effectués pendant les pauses d'usinage, pendant lesquelles l'outil d'usinage n'est pas en prise avec une pièce, et
une évolution des données spectrales EOL pronostiqués étant visualisée et/ou analysée en fonction des cycles de contrôle effectués, des pièces usinées ou du temps, en particulier par une analyse de régression.

5. Procédé selon l'une quelconque des revendications précédentes,
des données spectrales de référence de la machine étant disponibles pour une pluralité de machines de référence, qui ont été déterminées par une pluralité de cycles de contrôle de référence effectués sur les machines de référence,
des données spectrales EOL de référence pronostiquées étant déterminées à partir des données spectrales de référence de la machine,
les données spectrales EOL pronostiqués, qui ont été déterminées sur la base des données spectrales de la machine d'engrenage surveillée, étant comparées aux données spectrales EOL de référence pronostiquées ou à des grandeurs qui en sont dérivées,
le procédé comprenant en option une analyse statistique des données spectrales EOL de référence pronostiquées.

6. Procédé de surveillance de l'état d'une machine à usiner les engrenages comprenant une pluralité d'axes de machine, **caractérisé en ce que** le procédé comprend les étapes suivantes :
a) réalisation d'un contrôle EOL sur un engrenage contenant une pièce usinée par la machine à usiner les engrenages, dans lequel, lors du contrôle EOL, la pièce roule sur une contre-denture dans l'engrenage et des données de mesure EOL associées sont déterminées ;
b) réalisation d'une analyse spectrale des données de mesure EOL, dans laquelle des données spectrales EOL sont calculées à partir des données de mesure EOL ;
c) détermination de données d'état pronostiquées sur la base des données spectrales EOL, les données d'état pronostiquées indiquant pour au moins un axe de machine quels ordres de cet axe de machine sont cohérents avec les données spectrales EOL calculées ; et
d) facultativement, mettre à disposition les données d'état pronostiquées ou d'au moins une grandeur dérivée de celles-ci.

7. Procédé selon la revendication 6, qui comprend en outre :
e) réalisation d'un cycle de contrôle dans lequel au moins une partie des axes de la machine est actionnée systématiquement et les données de mesure attribuées à la machine sont déterminées ;
f) réalisation d'une analyse spectrale des données de mesure de la machine, dans laquelle des données spectrales de la machine sont calculées à partir des données de mesure de la machine ; et
g) détermination de données spectrales EOL pronostiquées sur la base des données spectrales de la machine, les données spectrales EOL pronostiquées indiquant à quels ordres des excitations sont attendues dans un spectre EOL lorsqu'une pièce usinée avec la machine à usiner les engrenages est montée dans un engrenage et roule sur une contre-denture dans l'engrenage,
la détermination des données d'état pronostiquées comprenant une comparaison des données spectrales EOL calculées à partir des données de mesure EOL avec les données spectrales EOL pronostiquées.

8. Procédé pour créer un ensemble de données d'apprentissage d'un algorithme d'apprentissage automatique destiné à être utilisé dans un procédé de surveillance de l'état d'une machine à usiner les engrenages comprenant une pluralité d'axes de machine, **caractérisé en ce que** le procédé comprend :
a) la réalisation d'un cycle de contrôle dans lequel au moins une partie des axes de la machine est actionnée de manière systématique et des données d'état associées sont déterminées par des mesures ;
b) l'usinage d'au moins une pièce avec la machine à usiner les engrenages alors que la machine à usiner les engrenages se trouve dans un état **caractérisé par** les données d'état ;
c) Installation de la pièce usinée dans un engrenage ;
d) réalisation d'un contrôle EOL sur l'engrenage, le contrôle EOL consistant à faire rouler la pièce dans l'engrenage sur une contre-denture et à déterminer les données EOL associées ;
e) enregistrement des données d'état et des données EOL correspondantes dans l'ensemble de données d'apprentissage ;
f) répétition des étapes a) à e) pour une pluralité de cycles de contrôle et de pièces usinées, les pièces présentant la même géométrie de consigne et étant usinées dans les mêmes conditions d'usinage,
l'algorithme d'apprentissage automatique étant de préférence un algorithme de classification, en particulier un réseau neuronal artificiel ou une machine à vecteurs de support, ou une forêt aléatoire.

9. Procédé d'entraînement d'un algorithme d'apprentissage automatique destiné à être utilisé dans un procédé de surveillance de l'état d'une machine à usiner les engrenages comprenant une pluralité d'axes de machine, **caractérisé en ce que** l'algorithme d'apprentissage automatique est entraîné avec l'ensemble de données d'entraînement de la revendication 8.

10. Procédé de surveillance d'un état d'une machine à usiner les engrenages comprenant une pluralité d'axes de machine,
**caractérisé en ce que** le procédé utilise un algorithme d'apprentissage automatique qui a été entraîné avec l'ensemble de données d'entraînement de la revendication 8.

11. Procédé selon la revendication 10,
dans lequel l'algorithme d'apprentissage automatique comprend, comme variables d'entrée, des données d'état de la machine à usiner les engrenages et, comme variables de sortie, des données EOL pronostiquées,
le procédé comprenant :
a) réalisation d'un cycle de contrôle, dans lequel au moins une partie des axes de la machine est actionnée systématiquement et des données d'état associées sont déterminées par des mesures ;
b) détermination des données EOL pronostiquées sur la base des données d'état, en fournissant les données d'état à l'algorithme apprentissage automatique entraîné en tant que variables d'entrée ; et
c) facultativement, mettre à disposition les données spectrales EOL prévues ou au moins une grandeur dérivée de celles-ci.

12. Procédé selon la revendication 10,
dans lequel l'algorithme d'apprentissage automatique comprend, comme variables d'entrée, des données EOL et, comme variables de sortie, des données d'état prévues de la machine à engrenages, et
le procédé comprenant :
a) réalisation d'un contrôle EOL sur l'engrenage, dans lequel, lors du contrôle EOL, la pièce à usiner roule sur une contre-denture dans l'engrenage et les données EOL associées sont déterminées ;
b) détermination de données d'état pronostiquées sur la base des données EOL, les données EOL étant fournies à l'algorithme d'apprentissage automatique entraîné en tant que variables d'entrée ; et
c) facultativement, mettre à disposition les données d'état pronostiquées ou d'au moins une grandeur dérivée de celles-ci.

13. Procédé selon l'une des revendications 8 à 12,
dans lequel les données étant corrélées à l'état d'un axe de machine en ce qui concerne son comportement vibratoire et comprennent en particulier des données spectrales de la machine qui ont été calculées par une analyse spectrale de données de mesure de la machine, et/ou
les données EOL étant corrélées au comportement sonore de l'engrenage et comprenant en particulier des données spectrales EOL calculées par une analyse spectrale de données de mesure EOL.

14. Dispositif pour surveiller l'état d'une machine à usiner les engrenages comprenant une pluralité d'axes de machine, comprenant un processeur (451) et un support de stockage (452) sur lequel est stocké un programme informatique, **caractérisé en ce que** le programme informatique, lorsqu'il est exécuté sur le processeur, provoque l'exécution des étapes suivantes :
réception de données d'état déterminées par un cycle de contrôle de la machine à usiner les engrenages, dans lequel au moins une partie des axes de la machine a été actionnée systématiquement et les données d'état associées ont été déterminées par des mesures ; et
détermination de données EOL pronostiquées qui sont en corrélation avec un comportement sonore d'un engrenage contenant une pièce usinée par la machine à usiner les engrenages, sur la base des données d'état.

15. Dispositif pour surveiller l'état d'une machine à usiner les engrenages comprenant une pluralité d'axes de machine, comprenant un processeur (451) et un support de stockage (452) sur lequel est enregistré un programme informatique, **caractérisé en ce que**, lorsqu'il est exécuté sur le processeur, le programme informatique provoque l'exécution des étapes suivantes :
réception de données EOL déterminées par un contrôle EOL sur un engrenage contenant une pièce usinée par la machine à usiner les engrenages, le contrôle EOL consistant à faire rouler la pièce dans l'engrenage sur une contre-denture et à déterminer les données EOL associées ; et
détermination de données d'état pronostiquées qui sont en corrélation avec l'état d'au moins un axe de la machine en ce qui concerne son comportement vibratoire, sur la base des données EOL.
